# EUROPEAN PATENT APPLICATION

(11) **EP 4 664 641 A1**
(43) Date of publication of application: **17.12.2025**
(21) Application number: 24182171.9
(22) Date of filing: 14.06.2024
(51) Int. Cl.: H01M 50/271

(54) **A PROTECTIVE COVER, A BATTERY CELL ASSEMBLY, AN ENERGY STORAGE SYSTEM, AND A VEHICLE**

(71) Applicant: VOLVO TRUCK CORPORATION, 405 08 Göteborg (SE)
(72) Inventor: Bhavani Shankar, Vijai Shankar, 414 78 Göteborg (SE); Rout, Dhirendra, 422 54 Göteborg (SE)
(74) Representative: Kransell & Wennborg KB

(57) **Abstract**

The disclosure relates to a protective cover (1) for protecting a battery cell top surface (21) of a battery cell (2), comprising:
- a main protective wall (11) with an extension in a longitudinal direction (L) and a width direction (W), and a top surface (111) facing upwardly in the height direction (H) and a bottom surface (112) facing downwardly in the height direction (H),
- at least one battery cell attachment portion (118) which is arranged to attach the protective cover (1) to the battery cell (2) such that the bottom surface (112) faces the battery cell top surface (21), wherein the at least one battery cell attachment portion (118) is configured to provide a snap-fit connection to the battery cell (2). The disclosure also relates to a battery cell assembly (2), an energy storage system (30), and a vehicle (6).

## Description

### TECHNICAL FIELD

The disclosure relates generally to battery cells and energy storage systems. In particular aspects, the disclosure relates to a protective cover for protecting a battery cell top surface of a battery cell, a battery cell assembly, an energy storage system, and a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A battery cell, also known as an electrochemical battery cell, is used for storing electrical energy. The battery cell may be a standalone cell or it may be part of an energy storage system comprising a plurality of battery cells which are electrically connected. The energy storage system may in some examples be denoted as a battery pack. The battery pack may for example be provided in a vehicle for providing electric power to one or more electric motors for driving the vehicle.

A battery cell may in some situations experience a rapid increase of the cell temperature due to uncontrolled reactions inside the cell, also known as thermal runaway. Hence, there is a strive to develop improved technology which at least partially mitigates the risk of thermal runaway and/or thermal runaway propagation.

### SUMMARY

According to a first aspect of the disclosure, a protective cover for protecting a battery cell top surface of a battery cell is provided. The protective cover has a longitudinal extension along a longitudinal direction, a width extension along a width direction and a height extension along a height direction. the protective cover comprises:
- a main protective wall with an extension in the longitudinal direction and the width direction, and a top surface facing upwardly in the height direction and a bottom surface facing downwardly in the height direction, wherein the main protective wall comprises at least one opening extending therethrough in the height direction and configured to give access to an electric terminal of the battery cell,
- at least one battery cell attachment portion which is arranged to attach the protective cover to the battery cell such that the bottom surface faces the battery cell top surface, wherein the at least one battery cell attachment portion is configured to provide a snap-fit connection to the battery cell. The first aspect of the disclosure may seek to provide an improved protective cover which protects the battery cell from thermal runaway propagation, and thus from thermal runaway of the battery cell. A technical benefit may include that the protective cover is adapted for effectively protecting the top surface of the battery cell while also facilitating mounting of the protective cover to the battery cell. This may result in a more cost-efficient configuration, e.g., a facilitated assembly procedure which is more time efficient.

Optionally in some examples, including in at least one preferred example, the at least one battery cell attachment portion protrudes downwardly from the bottom surface in the height direction. A technical benefit may include an improved connection to the battery cell, whereby the connection also may be concealed between the protective cover and the top surface.

Optionally in some examples, including in at least one preferred example, the at least one battery cell attachment portion is provided adjacent the at least one opening. A technical benefit may include a more rigid connection close to the opening, e.g., preventing any debris, gases, etc. from entering through an interface between the at least one opening and the electrical terminal.

Optionally in some examples, including in at least one preferred example, the at least one battery cell attachment portion is provided adjacent the at least one opening such that the at least one battery cell attachment portion forms an extension of the at least one opening, as seen in the height direction. A technical benefit may include that the at least one battery cell attachment portion is formed together with the at least one opening. This may result in a more cost-efficient configuration of the protective cover. Another technical benefit may include that a more rigid connection close to the opening is provided, as already mentioned in the above.

Optionally in some examples, including in at least one preferred example, the at least one battery cell attachment portion is provided offset from the at least one opening. A technical benefit may include that the battery cell attachment portion is provided at a location where there is more available space. This may result in a facilitated assembly procedure and/or a more cost-efficient configuration of the protective cover.

Optionally in some examples, including in at least one preferred example, the at least one battery cell attachment portion is configured to flex in a direction which is extending in a plane defined by the longitudinal direction and the width direction. A technical benefit may include that the at least one battery cell attachment portion will snap into engagement with the battery cell by flexing in the aforementioned direction which may be substantially parallel with the battery cell top surface. This may result in a robust and easy attachment of the protective cover to the battery cell.

Optionally in some examples, including in at least one preferred example, the at least one battery cell attachment portion comprises two attachment members which protrude downwardly from the bottom surface in the height direction and are offset from each other on the bottom surface, and wherein each attachment member is configured to flex in a direction which is extending in the plane defined by the longitudinal direction and the width direction such that the two attachment members can provide the snap-fit connection to a portion of the battery cell provided in-between the two attachment members. A technical benefit may include that a more robust and facilitated snap-fit engagement with the battery cell is enabled.

Optionally in some examples, including in at least one preferred example, the protective cover further comprises a side wall protruding downwardly from the main protective wall and extending around an outer perimeter of the main protective wall such that an inner surface of the side wall and the bottom surface of the main protective wall defines a space with a height corresponding to a height of the side wall, wherein the at least one battery cell attachment portion is provided in the space. A technical benefit may include that a space is formed in which the at least one battery cell attachment portion is protected by the side wall. This may result in an improved more robust connection of the protective cover to the battery cell.

Optionally in some examples, including in at least one preferred example, the main protective wall further comprises a weakened section which is configured to break when a pressure is applied onto the bottom surface at the weakened section which is above a pressure threshold. A technical benefit may include that any gas/debris from the inside of the battery cell may be efficiently released through the weakened section. This may reduce the risk of a thermal runaway event of the battery cell. A weakened section means herein that the section is weaker relative the other portions of the main protective wall. In some examples, the weaker section is formed by a wall portion which is thinner than surrounding portions of the main protective wall. Additionally, or alternatively, the weaker section may be formed by a material different from a material of the surrounding portions of the main protective wall.

Optionally in some examples, including in at least one preferred example, the main protective wall, at the top surface, comprises at least one first alignment element associated with the at least one opening and arranged to align a busbar such that the busbar is aligned with the longitudinal direction, and/or wherein the main protective wall, at the top surface, comprises at least one second alignment element arranged to align auxiliary electronic equipment such that the auxiliary electronic equipment is aligned with the longitudinal direction. A technical benefit may include that a defined location for the busbar and/or the auxiliary electronic equipment is enabled. This may result in a more robust configuration and/or a facilitated manufacturing procedure.

Optionally in some examples, including in at least one preferred example, the at least one opening has an extension in the longitudinal direction which corresponds to at least 50 % of a maximum length of the protective cover in the longitudinal direction. A technical benefit may include that the at least one opening will be better adapted for giving access to the electric terminal of the battery cell. Another technical benefit may include that the protective cover is adapted for protecting one battery cell.

According to a second aspect of the disclosure, a battery cell assembly comprising a battery cell is provided. The battery cell comprises a battery cell top surface and at least one electric terminal provided on the battery cell top surface. The battery cell assembly further comprises a protective cover according to any one of the examples of the first aspect of the disclosure, wherein the at least one battery cell attachment portion attach the protective cover to the battery cell such that the bottom surface faces the battery cell top surface and such that at least one electric terminal is accessible via the at least one opening. Advantages and technical benefits of the second aspect of the disclosure are analogous to the advantages and technical benefits of the first aspect of the disclosure.

Optionally in some examples, including in at least one preferred example, the battery cell top surface is a cell can surface of the battery cell. A technical benefit may include that the cell can surface of the battery cell is efficiently protected by the protective cover.

Optionally in some examples, including in at least one preferred example, the at least one electric terminal, on a side surface thereof, comprises a protrusion and/or a recess adapted to connect with at least one battery cell attachment portion of the at least one battery cell attachment portion. A technical benefit may include that the electric terminal is also used for attachment of the battery cell. This may result in a robust and reliable connection of the protective cover to the battery cell.

Optionally in some examples, including in at least one preferred example, the protrusion and/or the recess are/is provided on two opposing sides of the side surface. A technical benefit may include that an improved snap-fit engagement with the battery cell is enabled.

Optionally in some examples, including in at least one preferred example, the battery cell, on the battery cell top surface, comprises a protective cover attachment member which protrudes upwardly in the height direction and is offset from the at least one electric terminal, and wherein the protective cover attachment member attaches the protective cover to the battery cell by at least one battery cell attachment portion of the at least one battery cell attachment portion.

Optionally in some examples, including in at least one preferred example, the battery cell is a prismatic battery cell. Accordingly, in some examples, the protective cover may have a rectangular perimeter profile, as seen from above in the height direction. Alternatively, the battery cell may be a cylindrical battery cell. Hence, in some examples, the protective cover may have a circular perimeter profile, as seen from above in the height direction.

According to a third aspect of the disclosure, an energy storage system comprising a plurality of battery cell assemblies according to any one of the examples of the second aspect of the disclosure is provided. Advantages and technical benefits of the third aspect of the disclosure are analogous to the advantages and technical benefits of the first and second aspects of the disclosure. The energy storage system may comprise a housing for storing the plurality of battery cell assemblies. The plurality of battery cell assemblies may be stacked one after the other in one or more rows, such as in two or more parallel rows.

According to a fourth aspect of the disclosure, a vehicle comprising a battery cell assembly according to the second aspect of the disclosure and/or an energy storage system according to the third aspect of the disclosure is provided. Advantages and technical benefits of the fourth aspect of the disclosure are analogous to the advantages and technical benefits of the first, second and third aspects of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle in a side view according to an example.
**FIG. 2** is an exemplary protective cover in a perspective view according to an example.
**FIG. 3** is an exemplary protective cover in a perspective view according to an example.
**FIG. 4** is an exemplary battery cell assembly in a perspective view according to an example.
**FIG. 5** is an exemplary battery cell assembly in a perspective and sectional view according to an example.
**FIG. 6** is an exemplary battery cell in a perspective view according to an example.
**FIG. 7** is an exemplary battery cell assembly and energy storage system in a perspective view according to an example.

The drawings are not necessarily drawn to scale. It shall also be noted that some details in the drawings may be exaggerated in order to better describe and illustrate the particular example. Like reference characters refer to like elements throughout the description, unless expressed otherwise. Some reference characters in some of the drawings may have been omitted for the sake of clarity.

### DETAILED DESCRIPTION

The detailed description set forth below provides information and examples of the disclosed technology with sufficient detail to enable those skilled in the art to practice the disclosure.

An aim of the present disclosure is to provide a protective cover, a battery cell assembly, an energy storage system, and/or a vehicle which at least partially alleviates one or more drawbacks of the prior art, or which at least provide suitable alternatives. For example, by the present disclosure, an improved protective cover which protects the battery cell from thermal runaway propagation may be achieved, and thus from thermal runaway of the battery cell. A technical benefit may include that the protective cover is adapted for effectively protecting the top surface of the battery cell while also facilitating mounting of the protective cover to the battery cell. This may result in a more cost-efficient configuration, e.g., a facilitated assembly procedure which is more time efficient.

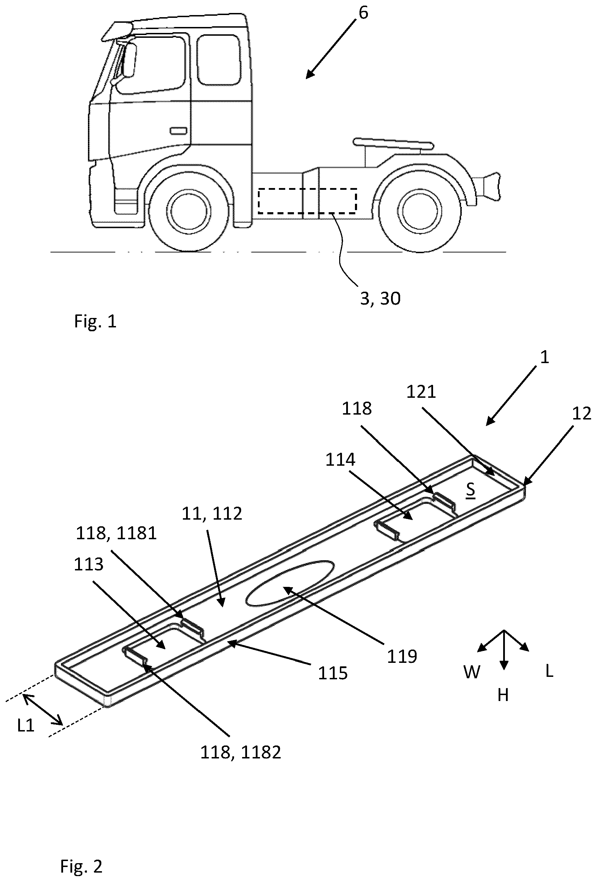

**FIG. 1** is an exemplary vehicle 6 in a side view according to an example. The vehicle 6 is a truck for towing one or more trailers (not shown). It shall however be understood that the vehicle may be any other type of vehicle, such as another type of truck, a bus, a passenger car, and construction equipment, such as an excavator, a wheel loader, etc. The vehicle 6 may be driven by a user (not shown) and/or be at least partly automatically driven, i.e., it may be a vehicle comprising autonomous driving capabilities. The vehicle 6 may be a fully electric vehicle or a hybrid vehicle. As such, the vehicle 6 may comprise one or more electric motors/generators and/or an internal combustion engine (not shown) for driving the vehicle 6. The vehicle 6 comprises a battery cell assembly 3 and/or an energy storage system 30 according to examples disclosed herein. The battery cell assembly 3 and/or the energy storage system 30 are preferably used for powering the one or more electric motors/generators. Even though the battery cell assembly 3 and/or the energy storage system 30 as disclosed herein may be used in a vehicle, it shall be noted that the battery cell assembly 3 and/or the energy storage system 30 may also be used in stationary machinery and/or in a building.

**FIG. 2** is an exemplary protective cover 1 in a perspective view according to an example. The protective cover 1 is configured to protect a battery cell top surface 21 of a battery cell 2, which will be further described in the below. The protective cover 1 has a longitudinal extension along a longitudinal direction L, a width extension along a width direction W and a height extension along a height direction H. The directions are perpendicular to each other and may also be referred to as a Cartesian coordinate system. In the shown example, the protective cover 1 is oriented so that its underside is shown.

The protective cover 1 comprises a main protective wall 11 with an extension in the longitudinal direction L and the width direction W, and a top surface 111 (not shown in FIG. 2) facing upwardly in the height direction H and a bottom surface 112 facing downwardly in the height direction H. The main protective wall 11 comprises at least one opening 113, 114 extending therethrough in the height direction H and configured to give access to an electric terminal 22 of the battery cell 2. In the shown example, there are two openings 113,114 for giving access to two electric terminals 22.

In the shown example, the protective cover 1 has a rectangular outer perimeter profile, as seen from above (or below) in the height direction H. More specifically, in the shown example, the protective cover is configured to protect a battery cell top surface 21 of a prismatic battery cell 2. The prismatic battery cell 2 is box-shaped, i.e. comprising four side surfaces connecting a bottom surface with the battery cell top surface 21.

The protective cover 1 further comprises at least one battery cell attachment portion 118 which is arranged to attach the protective cover 1 to the battery cell 2 such that the bottom surface 112 faces the battery cell top surface 21, wherein the at least one battery cell attachment portion 118 is configured to provide a snap-fit connection to the battery cell 2. A snap-fit connection may herein mean that a portion of one part will, by a biasing force, snap in engagement with a corresponding portion of another part.

As shown in e.g. FIG. 2, the at least one battery cell attachment portion 118 preferably protrudes downwardly from the bottom surface 112 in the height direction H.

In the example shown in FIG. 2, the at least one battery cell attachment portion 118 is provided adjacent the at least one opening 113, 114. In the shown example, a respective battery cell attachment portion 118 is provided adjacent to each opening 113, 114.

The at least one battery cell attachment portion 118 may as shown be provided adjacent the at least one opening 113, 114 such that the at least one battery cell attachment portion 118 forms an extension of the at least one opening 113, 114, as seen in the height direction H.

The at least one battery cell attachment portion 118 is preferably configured to flex in a direction which is extending in a plane defined by the longitudinal direction L and the width direction W.

The at least one battery cell attachment portion 118 may as shown comprise two attachment members 1181, 1182 which protrude downwardly from the bottom surface 112 in the height direction H and are offset from each other on the bottom surface 112. Each attachment member 1181, 1182 is in this example configured to flex in the direction which is extending in the plane defined by the longitudinal direction L and the width direction W such that the two attachment members 1181, 1182 can provide the snap-fit connection to a portion of the battery cell 2 provided in-between the two attachment members 1181, 1182. In the shown example, the flexing direction extends along the width direction W. By way of example, the at least one battery cell attachment portion 118 as disclosed herein is preferably configured to flex from a default position. The default position is preferably a position when the at least one battery cell attachment portion 118 protrudes downwardly from the bottom surface 112 in a direction which is perpendicular to the bottom surface 112.

The protective cover 1 may as shown in e.g. FIG. 2 further comprise a side wall 12 which protrudes downwardly from the main protective wall 11 and which extends around an outer perimeter 115 of the main protective wall 11 such that an inner surface 121 of the side wall 12 and the bottom surface 112 of the main protective wall 11 defines a space S with a height corresponding to a height of the side wall 12. The at least one battery cell attachment portion 118 is preferably provided in the space S.

In FIG. 2, it is further shown that the main protective wall 11 may further comprise a weakened section 119 which is configured to break when a pressure is applied onto the bottom surface 112 at the weakened section 119 which is above a pressure threshold. For example, the weakened section 119 may be a thinner section of the main protective wall 11 and/or it may be made of a material which is different from surrounding portions of the main protective wall 11. Additionally, or alternatively, the weakened section 119 may be accomplished by providing a break line which will break and separate the weakened section 119 from the protective cover 1 when a pressure above the pressure threshold is applied thereon. The weakened section 119 may as shown be formed as an oval or round section. Other forms are also possible, such as a square or rectangular form.

The at least one opening 113, 114 may, as shown in e.g. FIG. 2, have an extension in the longitudinal direction L which corresponds to at least 50 % of a maximum length L1 of the protective cover 1 in the longitudinal direction L. In the shown example, the longitudinal extension of the rectangular shaped protective cover 1 is shorter than the width extension of the rectangular shaped protective cover 1.

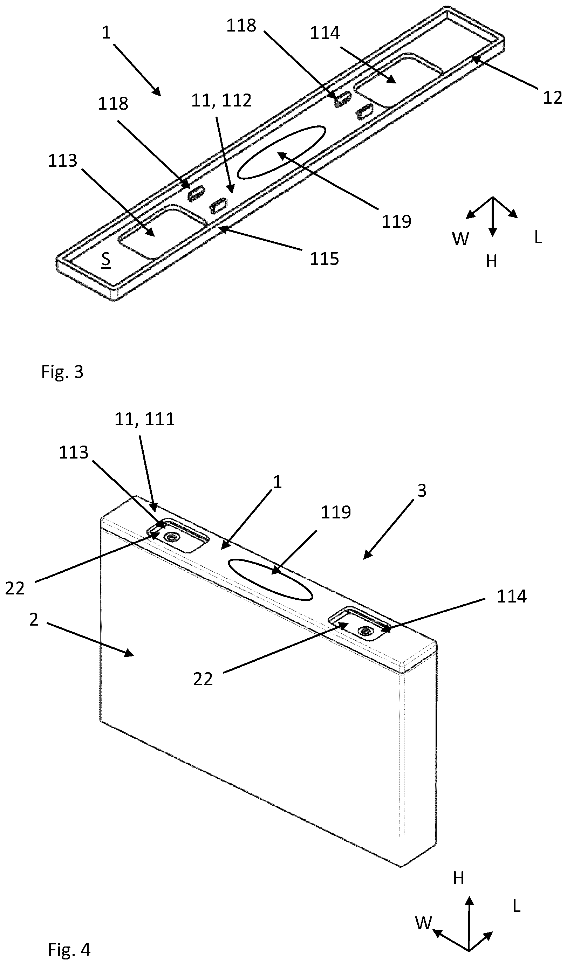

**FIG. 3** is an exemplary protective cover 1 in a perspective view according to an example. Similar to FIG. 2, the protective cover 1 is also here oriented so that its underside is shown. However, instead of providing the at least one battery cell attachment portion 118 adjacent the at least one opening 113, 114, the at least one battery cell attachment portion 118 is in this example provided offset from the at least one opening 113, 114. As also shown in this example, the flexing direction may extend along the longitudinal direction L. The protective cover 1 in FIG. 3 may otherwise be configured similarly to the protective cover 1 shown in FIG. 2. As further shown, the at least one battery cell attachment portion 118 may be located in-between an opening 113, 114 and the weakened section 119, as seen in the width direction W.

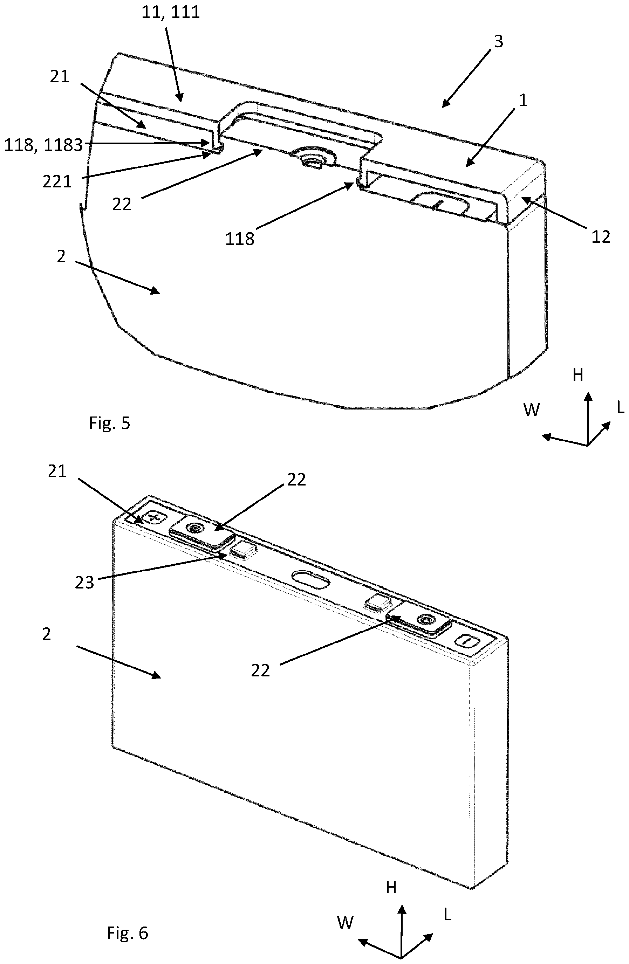

**FIG. 4** is an exemplary battery cell assembly 3 in a perspective and sectional view according to an example. **FIG. 5** is an exemplary battery cell assembly 3 in a perspective and sectional view according to an example. For example, the battery cell assembly shown in FIG. 5 may be the battery cell assembly 3 shown in FIG. 4.

The battery cell 2, which in these examples is a prismatic battery cell, comprises a battery cell top surface 21 and at least one electric terminal 22 provided on the battery cell top surface 21. In the shown examples, there are two electric terminals 22. The battery cell assembly 3 further comprises a protective cover 1 as e.g. shown in FIG. 2 or 3. The at least one battery cell attachment portion 118 attach the protective cover 1 to the battery cell 2 such that the bottom surface 112 faces the battery cell top surface 21 and such that at least one electric terminal 22 is accessible via the at least one opening 113, 114. Accordingly, in FIG. 4 and 5, the protective cover 1 is seen from above.

The battery cell top surface 21 is preferably a cell can surface of the battery cell 2, such as made of aluminum. Accordingly, the protective cover 1 is preferably an additional cover in addition to the cell can surface 21 of the battery cell 2.

As shown in FIG. 5, the at least one electric terminal 22, on a side surface thereof, may comprise a recess 221, and/or a protrusion (not shown), adapted to connect with at least one battery cell attachment portion 118 of the at least one battery cell attachment portion 118. Accordingly, the at least one battery cell attachment portion 118 may comprise a corresponding protrusion/recess 1183 which is configured to interact with the recess 221, and/or protrusion, of the electric terminal 22. Thereby, the protrusion/recess of the at least one battery cell attachment portion 118 may lock the protective cover 1 to the battery cell 2 via the corresponding recess/protrusion of the electric terminal 22.

The protrusion and/or the recess 221 of the electric terminal 22 may as shown be provided on two opposing sides of the side surface of the electric terminal 22.

FIG. 6 is an exemplary battery cell 2 in a perspective view according to an example. The battery cell 2 may be similarly configured as the battery cell 2 shown in FIG. 4 and/or 5. However, in the example shown in FIG. 6, the battery cell 2, on the battery cell top surface 21, comprises a protective cover attachment member 23 which protrudes upwardly in the height direction H and is offset from the at least one electric terminal 22. The protective cover attachment member 23 is configured to attach the protective cover 1 to the battery cell 2 by at least one battery cell attachment portion of the at least one battery cell attachment portion 118. More specifically, in this example, the protective cover 1 as shown in FIG. 3 is intended to be attached to the battery cell 2. Similar to the example, shown in FIG. 5, the protective cover attachment member 23 may comprise a recess/protrusion on its side surface for providing the snap-fit connection with the protective cover 1.

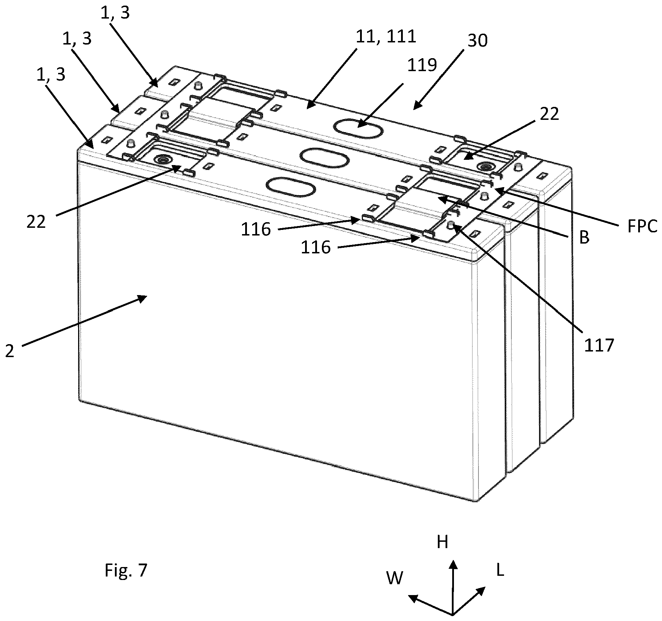

**FIG. 7** shows an example of three battery cell assemblies 3 provided next to each other, i.e., stacked one after the other. Accordingly, FIG. 7 also depicts an energy storage system 30 as disclosed herein. The battery cells 2 are preferably electrically connected via its electric terminals 22. The stacking direction is here along the longitudinal direction L.

As depicted in FIG. 7, the main protective wall 11, at the top surface 111, may comprise at least one first alignment element 116 associated with the at least one opening 113 and arranged to align a busbar B such that the busbar B is aligned with the longitudinal direction L, and/or the main protective wall 11, at the top surface 111, may comprise at least one second alignment element 117 arranged to align auxiliary electronic equipment FPC such that the auxiliary electronic equipment FPC is aligned with the longitudinal direction L. The auxiliary electronic equipment FPC may be a flexible printed circuit arranged to transfer data relating to temperature level, ampere level, voltage level etc. of the battery cells 2. The first alignment element 116 and/or the second alignment element 117 may for example be any type of protruding portion on the protective cover 1, such as a pin, a small wall, etc.

In the following, possible features and feature combinations of the present disclosure are presented as a list of Examples.
Example 1: A protective cover (1) for protecting a battery cell top surface (21) of a battery cell (2), the protective cover (1) having a longitudinal extension along a longitudinal direction (L), a width extension along a width direction (W) and a height extension along a height direction (H), the protective cover (1) comprising:
   - a main protective wall (11) with an extension in the longitudinal direction (L) and the width direction (W), and a top surface (111) facing upwardly in the height direction (H) and a bottom surface (112) facing downwardly in the height direction (H), wherein the main protective wall (11) comprises at least one opening (113, 114) extending therethrough in the height direction (H) and configured to give access to an electric terminal (22) of the battery cell (2),
   - at least one battery cell attachment portion (118) which is arranged to attach the protective cover (1) to the battery cell (2) such that the bottom surface (112) faces the battery cell top surface (21), wherein the at least one battery cell attachment portion (118) is configured to provide a snap-fit connection to the battery cell (2).
Example 2: The protective cover (1) according to Example 1, wherein the at least one battery cell attachment portion (118) protrudes downwardly from the bottom surface (112) in the height direction (H).
Example 3: The protective cover (1) according to Example 2, wherein the at least one battery cell attachment portion (118) is provided adjacent the at least one opening (113, 114).
Example 4: The protective cover (1) according to Example 3, wherein the at least one battery cell attachment portion (118) is provided adjacent the at least one opening (113, 114) such that the at least one battery cell attachment portion (118) forms an extension of the at least one opening (113, 114), as seen in the height direction (H).
Example 5: The protective cover (1) according to Example 2, wherein the at least one battery cell attachment portion (118) is provided offset from the at least one opening (113, 114).
Example 6: The protective cover (1) according to any one of the preceding Examples, wherein the at least one battery cell attachment portion (118) is configured to flex in a direction which is extending in a plane defined by the longitudinal direction (L) and the width direction (W).
Example 7: The protective cover (1) according to Example 6, wherein the at least one battery cell attachment portion (118) comprises two attachment members (1181, 1182) which protrude downwardly from the bottom surface (112) in the height direction (H) and are offset from each other on the bottom surface (112), and wherein each attachment member (1181, 1182) is configured to flex in a direction which is extending in the plane defined by the longitudinal direction (L) and the width direction (W) such that the two attachment members (1181, 1182) can provide the snap-fit connection to a portion of the battery cell (2) provided in-between the two attachment members (1181, 1182).
Example 8: The protective cover (1) according to any one of the preceding Examples, further comprising a side wall (12) protruding downwardly from the main protective wall (11) and extending around an outer perimeter (115) of the main protective wall (11) such that an inner surface (121) of the side wall (12) and the bottom surface (112) of the main protective wall (11) defines a space (S) with a height corresponding to a height of the side wall (12), wherein the at least one battery cell attachment portion (118) is provided in the space (S).
Example 9: The protective cover (1) according to any one of the preceding Examples, wherein the main protective wall (11) further comprises a weakened section (119) which is configured to break when a pressure is applied onto the bottom surface (112) at the weakened section (119) which is above a pressure threshold.
Example 10: The protective cover (1) according to any one of the preceding Examples, wherein the main protective wall (11), at the top surface (111), comprises at least one first alignment element (116) associated with the at least one opening (113) and arranged to align a busbar (B) such that the busbar (B) is aligned with the longitudinal direction (L), and/or wherein the main protective wall (11), at the top surface (111), comprises at least one second alignment element (117) arranged to align auxiliary electronic equipment (FPC) such that the auxiliary electronic equipment is aligned with the longitudinal direction (L).
Example 11: The protective cover (1) according to any one of the preceding Examples, wherein the at least one opening (113, 114) has an extension in the longitudinal direction (L) which corresponds to at least 50 % of a maximum length (L1) of the protective cover (1) in the longitudinal direction (L).
Example 12: A battery cell assembly (3) comprising a battery cell (2), the battery cell (2) comprising a battery cell top surface (21) and at least one electric terminal (22) provided on the battery cell top surface (21), and the battery cell assembly (3) further comprising a protective cover (1) according to any one of the preceding Examples, wherein the at least one battery cell attachment portion (118) attach the protective cover (1) to the battery cell (2) such that the bottom surface (112) faces the battery cell top surface (21) and such that at least one electric terminal (22) is accessible via the at least one opening (113, 114).
Example 13: The battery cell assembly (3) according to Example 12, wherein the battery cell top surface (21) is a cell can surface of the battery cell (2).
Example 14: The battery cell assembly (3) according to any one of Examples 12 or 13, wherein the at least one electric terminal (22), on a side surface thereof, comprises a protrusion and/or a recess (221) adapted to connect with at least one battery cell attachment portion of the at least one battery cell attachment portion (118).
Example 15: The battery cell assembly (3) according to Example 14, wherein the protrusion and/or the recess (221) are/is provided on two opposing sides of the side surface.
Example 16: The battery cell assembly (3) according to any one of Examples 12-15, wherein the battery cell (2), on the battery cell top surface (21), comprises a protective cover attachment member (23) which protrudes upwardly in the height direction (H) and is offset from the at least one electric terminal (22), and wherein the protective cover attachment member (23) attaches the protective cover (1) to the battery cell (2) by at least one battery cell attachment portion of the at least one battery cell attachment portion (118).
Example 17: The battery cell assembly (3) according to any one of Examples 12-16, wherein the battery cell (2) is a prismatic battery cell.
Example 18: The battery cell assembly (3) according to any one of Examples 12-16, wherein the battery cell (2) is a cylindrical battery cell.
Example 19: An energy storage system (30) comprising a plurality of battery cell assemblies according to any one of Examples 12-18.
Example 20: A vehicle (6) comprising a battery cell assembly (3) according to any one of Examples 12-18 and/or an energy storage system according to Example 19.

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A protective cover (1) for protecting a battery cell top surface (21) of a battery cell (2), the protective cover (1) having a longitudinal extension along a longitudinal direction (L), a width extension along a width direction (W) and a height extension along a height direction (H), the protective cover (1) comprising:
- a main protective wall (11) with an extension in the longitudinal direction (L) and the width direction (W), and a top surface (111) facing upwardly in the height direction (H) and a bottom surface (112) facing downwardly in the height direction (H), wherein the main protective wall (11) comprises at least one opening (113, 114) extending therethrough in the height direction (H) and configured to give access to an electric terminal (22) of the battery cell (2),
- at least one battery cell attachment portion (118) which is arranged to attach the protective cover (1) to the battery cell (2) such that the bottom surface (112) faces the battery cell top surface (21), wherein the at least one battery cell attachment portion (118) is configured to provide a snap-fit connection to the battery cell (2).

2. The protective cover (1) according to claim 1, wherein the at least one battery cell attachment portion (118) protrudes downwardly from the bottom surface (112) in the height direction (H).

3. The protective cover (1) according to claim 2, wherein the at least one battery cell attachment portion (118) is provided adjacent the at least one opening (113, 114).

4. The protective cover (1) according to claim 3, wherein the at least one battery cell attachment portion (118) is provided adjacent the at least one opening (113, 114) such that the at least one battery cell attachment portion (118) forms an extension of the at least one opening (113, 114), as seen in the height direction (H).

5. The protective cover (1) according to claim 2, wherein the at least one battery cell attachment portion (118) is provided offset from the at least one opening (113, 114).

6. The protective cover (1) according to any one of the preceding claims, wherein the at least one battery cell attachment portion (118) is configured to flex in a direction which is extending in a plane defined by the longitudinal direction (L) and the width direction (W).

7. The protective cover (1) according to claim 6, wherein the at least one battery cell attachment portion (118) comprises two attachment members (1181, 1182) which protrude downwardly from the bottom surface (112) in the height direction (H) and are offset from each other on the bottom surface (112), and wherein each attachment member (1181, 1182) is configured to flex in a direction which is extending in the plane defined by the longitudinal direction (L) and the width direction (W) such that the two attachment members (1181, 1182) can provide the snap-fit connection to a portion of the battery cell (2) provided in-between the two attachment members (1181, 1182).

8. The protective cover (1) according to any one of the preceding claims, further comprising a side wall (12) protruding downwardly from the main protective wall (11) and extending around an outer perimeter (115) of the main protective wall (11) such that an inner surface (121) of the side wall (12) and the bottom surface (112) of the main protective wall (11) defines a space (S) with a height corresponding to a height of the side wall (12), wherein the at least one battery cell attachment portion (118) is provided in the space (S).

9. The protective cover (1) according to any one of the preceding claims, wherein the main protective wall (11) further comprises a weakened section (119) which is configured to break when a pressure is applied onto the bottom surface (112) at the weakened section (119) which is above a pressure threshold.

10. A battery cell assembly (3) comprising a battery cell (2), the battery cell (2) comprising a battery cell top surface (21) and at least one electric terminal (22) provided on the battery cell top surface (21), and the battery cell assembly (3) further comprising a protective cover (1) according to any one of the preceding claims, wherein the at least one battery cell attachment portion (118) attach the protective cover (1) to the battery cell (2) such that the bottom surface (112) faces the battery cell top surface (21) and such that at least one electric terminal (22) is accessible via the at least one opening (113, 114).

11. The battery cell assembly (3) according to claim 10, wherein the battery cell top surface (21) is a cell can surface of the battery cell (2).

12. The battery cell assembly (3) according to any one of claims 10 or 11, wherein the at least one electric terminal (22), on a side surface thereof, comprises a protrusion and/or a recess (221) adapted to connect with at least one battery cell attachment portion of the at least one battery cell attachment portion (118).

13. The battery cell assembly (3) according to any one of claims 10-12, wherein the battery cell (2), on the battery cell top surface (21), comprises a protective cover attachment member (23) which protrudes upwardly in the height direction (H) and is offset from the at least one electric terminal (22), and wherein the protective cover attachment member (23) attaches the protective cover (1) to the battery cell (2) by at least one battery cell attachment portion of the at least one battery cell attachment portion (118).

14. An energy storage system (30) comprising a plurality of battery cell assemblies according to any one of claims 10-13.

15. A vehicle (6) comprising a battery cell assembly (3) according to any one of claims 10-13 and/or an energy storage system according to claim 14.
